# EUROPÄISCHE PATENTANMELDUNG

(11) **EP 1 067 029 A2**
(43) Veröffentlichungstag der Anmeldung: **10.01.2001**
(21) Anmeldenummer: 00113980.7
(22) Anmeldetag: 01.07.2000
(51) Int. Cl.: B60S 1/24

(54) **Verfahren zur Herstellung kraftübertragender Komponenten von Wischanlagen**

(30) Priorität: 08.07.1999 DE 19931885
(71) Anmelder: ROBERT BOSCH GMBH, 70442 Stuttgart (DE)
(72) Erfinder: Eiben, Roland, 76135 Karlsruhe (DE)

(57) **Zusammenfassung**

Die Erfindung bezieht sich auf eine kraftübertragende Komponente, wie Antriebskurbeln (10), Motorkurbeln (7) oder Befestigungsteile (11) von Wischerarmen (12) in Wischeranlagen (2) für Fahrzeuge. Die kraftübertragenden Komponenten umfassen plattenförmige Elemente (15, 16, 23, 24; 26), die mit Kugelzapfen (19), Lagerwellen (20, 21) oder Konuselementen (27) versehen werden. Die plattenförmigen Elemente (15, 16, 23, 24; 26) sind mit Kugelzapfen (19), Lagerwellen (20, 21) und/oder Konuselementen (27) stoffschlüssig verbunden, wobei die Verbindung stofflich durchgängig ausgebildet ist.

## Beschreibung

### Technisches Gebiet:

Die Erfindung bezieht sich auf die Herstellung von Wischeranlagen und deren Komponenten zur Kraftübertragung wie beispielsweise Antriebskurbeln und Motorkurbeln, sowie Befestigungsteile für Wischerarme.

### Stand der Technik:

Kraftübertragende Baukomponenten in Wischeranlagen wie beispielsweise Motorkurbeln oder die Antriebskurbeln zur Bewegung der Wischerarme, weisen ein Lagerplattenbauteil sowie einen Kugelzapfen auf. An den Antriebskurbeln zur Bewegung der Wischerarme können auch eine Lagerwelle und mehrere Kugelzapfen aufgenommen sein. Die Befestigung der Lagerwelle und der Kugelzapfen erfolgt durch das Einstecken der Lagerwelle bzw. des Kugelzapfens in eine dafür vorgesehene Durchbrechung der Lagerplatte, wobei die Verbindung in der Regel durch Nieten, Einpressen oder eine Ringverstemmung hergestellt wird. Zur Verbindung des Kugelzapfens und der Lagerwelle mit der Lagerplatte ist an den Bauteilen ein Bolzen angebracht, der in die an der Lagerplatte vorgesehene Durchbrechung eingreift und dort beispielsweise taumelgenietet wird. Bei Antriebskurbeln zur Bewegung der Wischerarme, bei denen die Lagerplatte in der Mitte der Welle angebracht ist, wird die Lagerwelle in diesem Bereich mit einem Ring versehen, der eine Rändelung aufweist. Die Rändelung wird in einem zusätzlich erforderlichen Arbeitsgang gehärtet. Die Verbindung zwischen Lagerplatte und Antriebskurbel wird in diesem Falle durch eine Ringverstemmung herbeigeführt. Von Nachteil ist hierbei der Umstand, daß der Nietvorgang bzw. die form- und/oder reibschlüssige Verbindung durch Einpressen aufwendig herzustellen ist und Qualitätsprobleme aufwerfen kann.

Bei Befestigungsteilen von Wischerarmen kann zur Aufnahme der Lagerwelle ein gegossener Konus, ein Einlegeteil oder ein aus einem Blechteil vorgeformter Konus vorgesehen sein.

### Darstellung der Erfindung:

Durch eine stoffschlüssige Verbindung, beispielsweise einer Schweißverbindung, zwischen plattenförmigem Element und Lagerwellen bzw. Kugelbolzen können vorbereitende Arbeitsgänge wie beispielsweise die Lochung der plattenförmigen Elemente entfallen, was die Verwendung einfacher Unterbaugruppen ermöglicht. Die Rändelung der Lagerwellen kann ebenfalls entfallen, was den Verzicht auf einen zusätzlich auszuführenden Arbeitsgang erlaubt, wodurch auch das im Rahmen eines separaten Arbeitsgangs durchgeführte Härten entfallen kann. Ferner kann durch das stoffschlüssige Verbindungsverfahren erreicht werden, daß die Anzahl beispielsweise der plattenförmigen Elemente auf Standardlängen und Standarddicken reduziert werden kann, da alle Komponenten in Abständen auf die plattenförmigen Elemente mittels eines thermischen Fügeverfahrens aufgebracht werden können. Damit einher geht eine erhebliche Reduzierung der Bauteile, da auch die Lagerwellenoberteil- und Lagerwellenunterteilanzahl reduziert werden kann. Diese können nunmehr in den unterschiedlichsten Kombinationen miteinander verbunden werden. Mittels der erfindungsgemäßen Lösung läßt sich eine sehr flexible, baukastengerechte Fertigung mit kürzesten Taktzeiten realisieren, wobei eine Qualitätsüberwachung während des thermischen Fügens einfach durchführbar ist.

In weiterer vorteilhafter Ausgestaltung des der Erfindung zugrundeliegenden Gedankens, können an den plattenförmigen Elementen zu befestigende Bauteile, wie Kugelzapfen, Lagerwellen oder die Konuselemente mit einer oder mehreren Erhebungen versehen sein. Diese können durch einfache Dreh- oder Umformoperationen an den Bauteilen angeformt werden und erleichtern ein thermisches Fügen der Bauteile signifikant.

Bevorzugt wird die Verbindung zwischen plattenförmigen Elementen und der daran anzubringenden Bauteile im Wege des Impuls-Widerstandsschweißens hergestellt. Dieses thermische Fügeverfahren zeichnet sich durch eine extrem kurze Schweißzeit von zwischen 4 und 12 ms aus. Es entsteht eine sehr geringe Wärmeeinbringung, wodurch sich thermisch bedingter Verzug der Bauteile ausschließen läßt. Bei Anwendung dieses Verfahrens ist eine sehr gute Reproduzierbarkeit gewährleistet; das Verfahren erfordert keine Schweißzusatzwerkstoffe und läßt sich mit wenig Aufwand betreiben. Ferner eignet sich das Impuls-Widerstandsschweißen sehr gut zur Prozeßüberwachung auf automatischem Wege.

Als kraftübertragende Komponenten lassen sich beispielsweise Antriebskurbeln, Motorkurbeln oder Befestigungsteile für Wischerarme in Wischanlagen extrem kostengünstig und mechanisch belastbar fertigen.

Die plattenförmigen Elemente können als Halbzeug beispielsweise als Blechformbauteile hergestellt werden. In Wischanlagen für Kraftfahrzeuge, Schienenfahrzeuge, auf Schiffen, Booten oder auch in Flugzeugen lassen sich Wischanlagen mit kraftübertragenden Komponenten gemäß der vorliegenden Erfindung äußerst vorteilhaft und betriebssicher einsetzen.

### Zeichnung:

In der Zeichnung sind verschiedene Ausführungsbeispiele der Erfindung dargestellt.

Es zeigt:
- Figur 1: eine Draufsicht auf eine Gleichlaufwischeranlage in einem Kraftfahrzeug,
- Figuren 2, 3: Antriebskurbeln mit zweiteiligen Lagerwellen, mit an Ober- bzw. Unterseite befestigten Kugelbolzen,
- Figur 4: eine gekröpfte Antriebkurbel,
- Figuren 5, 6: Antriebskurbeln mit einteiligen Lagerwellen,
- Figuren 7, 8: gekröpfte Antriebswellen mit einteiliger Lagerwelle,
- Figur 9: eine gekröpfte Antriebskurbel mit zweiteiligen Lagerwellen,
- Figuren 10, 11: gekröpfte und ebene Motorkurbeln mit Kugelzapfen,
- Figur 12: ein Befestigungsteil für einen Wischerarm mit integriertem Befestigungskonus und
- Figur 13: die an einem ebenen plattenförmigen Element zu befestigenden Bauteile mit das Fügeverfahren unterstützenden Erhebungen.

### Ausführungsbeispiele:

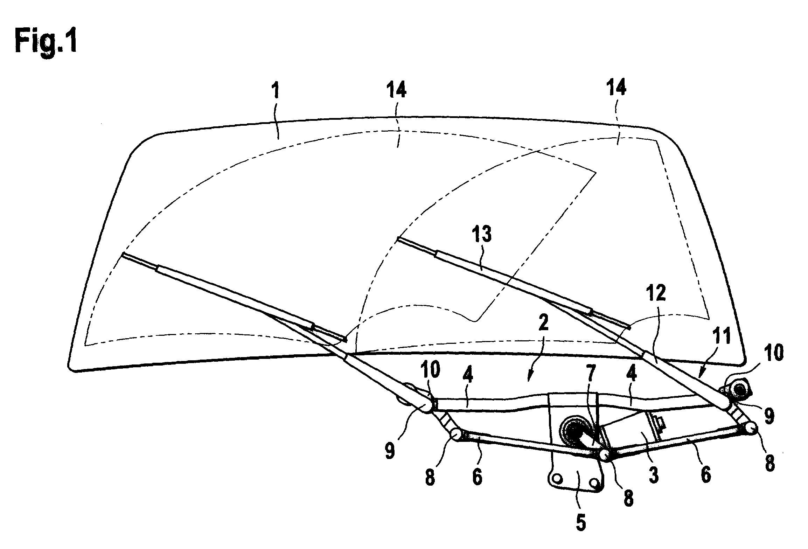

Figur 1 zeigt eine Draufsicht auf eine Gleichlaufwischeranlage in einem Kraftfahrzeug.

Unterhalb einer beispielsweise in einem Kraftfahrzeug aufgenommenen Frontscheibe 1 ist eine Wischanlage 2 angeordnet. Diese umfaßt neben anderen Bauteilen einen Wischermotor 3, der an einer Befestigungsplatte 5 aufgenommen ist, die ihrerseits an einer Platine 4 befestigt ist. Der Wischermotor 3 treibt eine Motorkurbel 7 an, die im Anlenkpunkt 8 an sich zu beiden Seiten des Anlenkpunkts 8 erstreckenden Gelenkstangen 6 aufgenommen ist und in eine rotlatorische Bewegung versetzbar ist. Die sich zu beiden Seiten der Befestigungsplatte 5 erstreckenden Gelenkstangen 6 sind ihrerseits mit Antriebskurbeln 10 versehen, die an Wischerlagern 9 gelagerte Befestigungsteile 11 von Wischerarmen 12 derart in eine Drehbewegung versetzen, daß Wischerblätter 13 Wischfelder 14 im in Figur 1 dargestellten Ausmaß überstreichen.

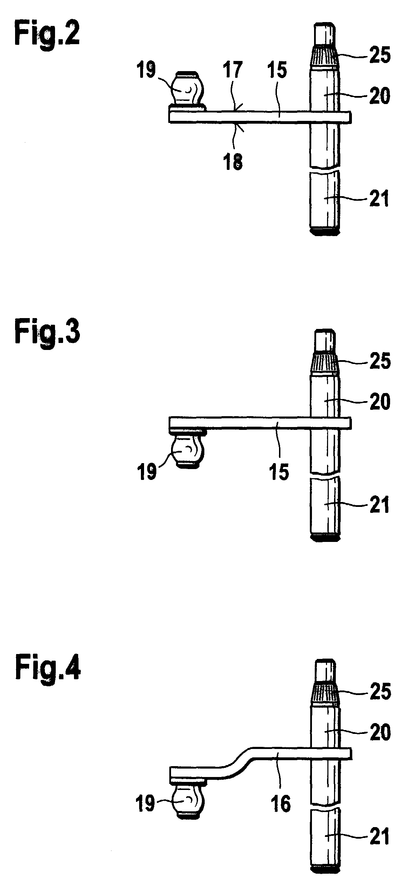

Figur 2 zeigt eine Antriebskurbel 10 mit zweiteiliger Lagerwelle und einem Kugelzapfen 19.

Ein ebenes, plattenförmiges Element 15 weist eine Oberseite 17 und eine Unterseite 18 auf. An der Oberseite 17 ist ein Kugelzapfen 19 befestigt; seitlich versetzt dazu ist ein Lagerwellenoberteil 20 mit einer Rändelung 25 stoffschlüssig mit der Oberseite 17 des plattenförmigen Elements 15 verbunden. An der Unterseite 18 des plattenförmigen Elements 15 ist ein Lagerwellenunterteil 21 angeschweißt. Das thermische Fügeverfahren zum Verbinden der dargestellten Bauteile ist bevorzugt das Impuls-Widerstandsschweißen.

Figur 3 zeigt ein alternatives Ausführungsbeispiel zur in Figur 2 dargestellten Antriebskurbel.

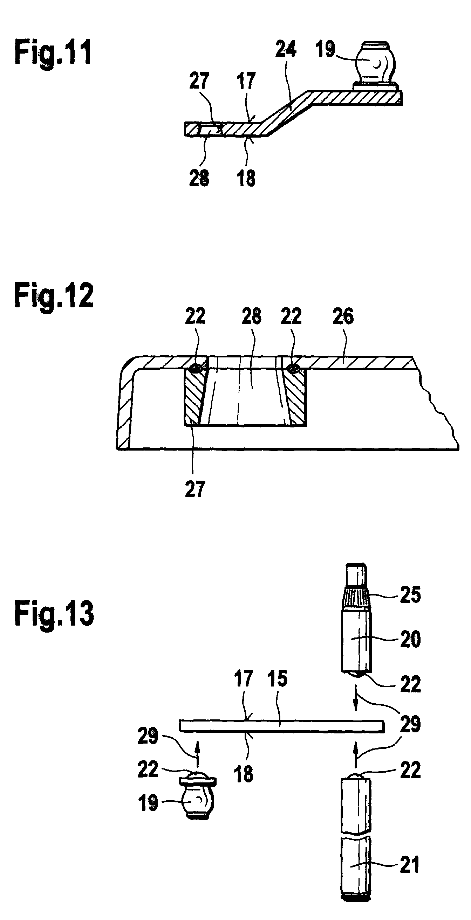

Verglichen mit dem in Figur 2 dargestellten Ausführungsbeispiel ist der Kugelzapfen 19 mit der Unterseite 18 des plattenförmigen Bauelements 15 stoffschlüssig verbunden (vergl. Figur 13). In Figur 13 sind die Vorsprünge oder Erhebungen 22 dargestellt, die an den am plattenförmigen Element 15 zu befestigenden Bauteilen wie beispielsweise Kugelzapfen 19, Lagerwellenoberteil 20 und Lagerwellenunterteil 21 vorgesehen sein können, um das thermische Fügen mit den plattenförmigen Element 15 im Wege des Impuls-Widerstandsschweißens zu unterstützen. Das plattenförmige Bauelement 15 verläuft eben und nimmt ein Lagerwellenoberteil 20 mit Rändelung 25 auf, sowie ein Lagerwellenunterteil 21.

Figur 4 zeigt eine gekröpfte Antriebskurbel.

Ähnlich wie die Darstellung der Antriebskurbel in Figur 3 ist der Kugelzapfen 19 an der Unterseite des gekröpft ausgeführten plattenförmigen Bauelements 16 aufgenommen. Die zweiteilige Lagerwelle, bestehend aus Lagerwellenoberteil 20 mit Rändelung 25 und Lagerwellenunterteil 21, wird mit dem gekröpften plattenförmigen Bauelement 16 mittels des Impuls-Widerstandsschweißens verbunden. Mittels dieses Verfahrens lassen sich die Bauteile an dem plattenförmigen Bauelement 16 in beliebigen Abständen voneinander plazieren, ohne daß beispielsweise Bohrungen oder ähnliche Durchbrüche an diesen vorgesehen sein müssen.

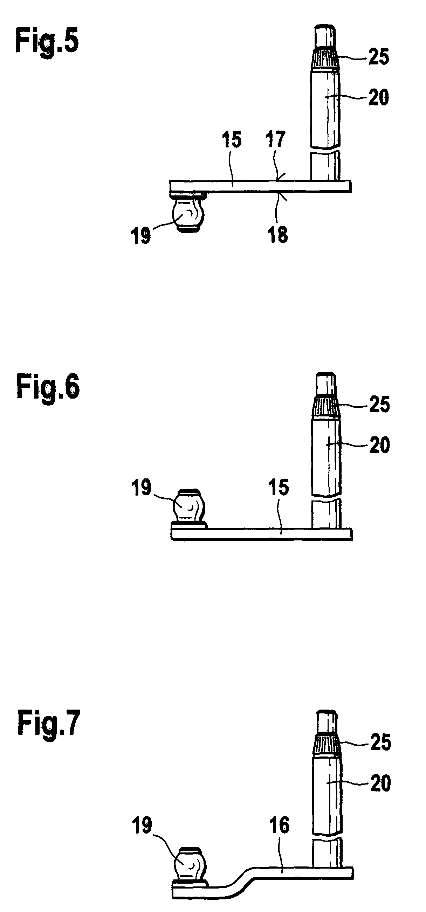

In den Figuren 5, 6 sind Antriebskurbeln 10 dargestellt, an denen der Kugelzapfen 19 entweder an der Oberseite 17 des plattenförmigen Bauelements 15 oder an dessen Unterseite 18 befestigt ist. Beide in Figuren 5 und 6 dargestellten Varianten einer Antriebskurbel 10 umfassen an der Oberseite 17 lediglich ein Lagerwellenoberteil 20.

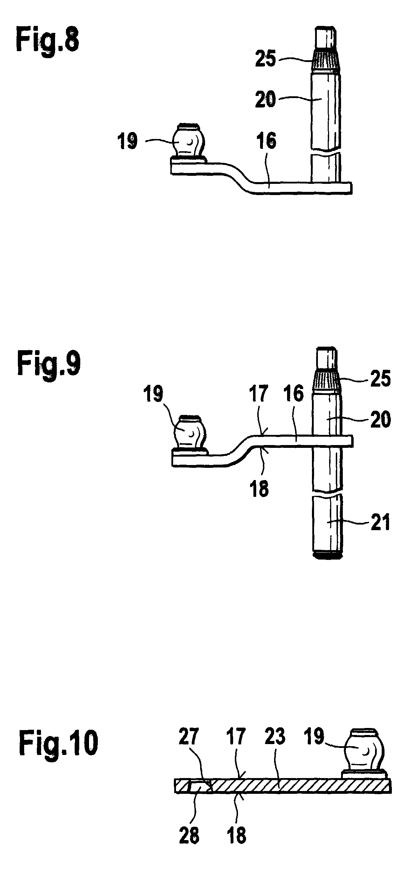

Die Figuren 7 und 8 zeigen wechselseitig gekröpft ausgeführte Antriebskurbeln 10, bei denen das plattenförmige Bauelement 16 einmal mit Versatz nach oben (Figur 7) und einmal mit Versatz nach unten (Figur 8) ausgeführt ist. In beiden Ausführungsvarianten der kraftübertragenden Komponenten sind die Kugelzapfen 19 an der Oberseite des gekröpft ausgeführten plattenförmigen Bauelements 16 befestigt. In der gezeigten Ausführungsvariante sind an den gekröpften plattenförmigen Bauelementen 16 Lagerwellenoberteile 20 mit angeformter ringförmig verlaufendem Rändelabschnitt 25 stoffschlüssig verbunden, wobei zur Erzielung des durchgängigen Stoffschlusses das Impuls-Widerstandsschweißverfahren eingesetzt wird.

Figur 9 zeigt eine gekröpfte Antriebskurbel 10, die mit einer zweiteiligen Lagerwelle, bestehend aus Lagerwellenoberteil 20 und Lagerwellenunterteil 21, versehen ist. Das gekröpft ausgeführte plattenförmige Bauelement 16 ist an seiner Oberseite 17 mit einem Kugelzapfen 19 versehen, der mit dem plattenförmigen Bauelement 16 ein stoffschlüssige Verbindung durch Anwendung des Impuls-Widerstandsschweißenverfahrens eingeht. Das gekröpfte plattenförmige Bauelement 16 ist in einem Endbereich mit einer zweiteiligen Lagerwelle versehen, bestehend aus Lagerwellenoberteil 20 und Lagerwellenunterteil 21.

Die Figur 10 zeigt eine ebene Motorkurbel 7. Die Motorkurbel 7, gemäß Figur 1 als kraftübertragende Komponente zwischen Wischermotor 3 und Gelenkstangen 6 angeordnet, umfaßt einen Kugelzapfen 19, der an der Oberseite 17 des ebenen plattenförmigen Bauelements 23 durch eine stoffschlüssige, materialdurchgängige Verbindung verbunden ist. Das ebene, plattenförmige Bauelement 23 umfaßt eine Durchbrechung 28, die als Konuselement 27 ausgeführt ist. Anstelle eines ebenen, planverlaufenden plattenförmigen Bauelements 23 kann gemäß Figur 11 ein gekröpftes, plattenförmiges Element 24 vorgesehen sein, mit welchem der Kugelzapfen 19 stoffschlüssig durchgängig verbunden ist. Die Durchbrechung 28 kann ein Konuselement 27 enthalten, entweder in dem plattenförmigen ebenen gekröpften Bauelement 23 bzw. 24 als Einsatz eingebracht oder als entsprechend konusförmig verlaufende Bohrung ausgebildet.

In Figur 12 ist ein Befestigungsteil 11 (vergl. Figur 1) für einen Wischerarm 12 dargestellt. Das Befestigungsteil ist in der in Figur 12 wiedergegebenen Darstellung als ein Blechformteil ausgebildet, an dem innenliegend ein konusförmiges Element 27 befestigt ist. Das Konuselement 27 kann besonders vorteilhaft mittels des Impuls-Widerstandsschweißverfahrens mit dem Blechformteil 26 stoffschlüssig durchgängig verbunden werden. Dabei ist nahezu jede Positionierung des Konuselements 27 relativ zum Blechformteil 26 denkbar.

Figur 13 schließlich zeigt die beispielsweise an einem ebenen, plattenförmigen Bauelement 15 durchzuführenden Fügevorgänge 29. An der Oberseite 17 des plattenförmigen Bauelements 15 wird das Lagerwellenoberteil 20 mit Erhebung 22 und Rändelabschnitt 25 in Fügerichtung 29 positioniert und mittels des Impuls-Widerstandsschweißverfahrens an diesem befestigt. Ebenso werden an der Unterseite 18 des plattenförmigen, ebenen Bauelements 15 der Kugelzapfen 19 in Fügerichtung 29 und das Lagerwellenunterteil 21 in Fügerichtung 29 an dem plattenförmigen Bauelement 15 positioniert. Mittels des Impuls-Widerstandsschweißens werden die Bauteile 19, 20 21 stoffschlüssig und materialdurchgängig mit dem plattenförmigen Bauelement 15 an Unter- bzw. Oberseite 17, 18 verbunden, ohne daß Bohrungen oder dergleichen an diesen vorzusehen sind. Die Bauteile 19, 20, 21 können in beliebigen Abständen voneinander am plattenförmigen Bauelement positioniert werden, was Standardabmessungen der plattenförmigen Bauelemente 15, 16, 23 oder 24 erlaubt und vorbereitende Arbeitsgänge weitgehend überflüssig macht.

### Bezugszeichenliste

- 1: Frontscheibe
- 2: Wischanlage
- 3: Wischermotor
- 4: Platine
- 5: Befestigungsplatte
- 6: Gelenkstange
- 7: Motorkurbel
- 8: Anlenkpunkt
- 9: Wischerlager
- 10: Antriebskurbel
- 11: Befestigungsteil
- 12: Wischerarm
- 13: Wischblatt
- 14: Wischfeld
- 15: Lagerplatte
- 16: gekröpfte Lagerplatte
- 17: Oberseite
- 18: Unterseite
- 19: Kugelzapfen
- 20: Lagerwellenoberteil
- 21: Lagerwellenunterteil
- 22: Vorsprung/Erhebung
- 23: Lagerplatte
- 24: gekröpfte Lagerplatte
- 25: Rändelung
- 26: Blechformteil
- 27: Konuselement
- 28: Durchbrechung
- 29: Fügerichtung

## Patentansprüche

1. Kraftübertragende Komponente in Wischeranlagen für Fahrzeuge, wobei die kraftübertragenden Komponenten plattenförmige Elemente (15, 16, 23, 24; 26) umfassen, die mit Kugelzapfen (19), Lagerwellen (20, 21) oder Konuselemente (27) versehbar sind, dadurch gekennzeichnet, daß die plattenförmigen Elemente (15, 16, 23, 24; 26) mit dem Kugelzapfen (19) und/oder Lagerwellen (20, 21) und/oder Konuselemente (27) stoffschlüssig verbunden sind und die Verbindung stofflich durchgängig ausgebildet ist.

2. Kraftübertragende Komponente gemäß Anspruch 1, dadurch gekennzeichnet, daß die an den plattenförmigen Elementen (15, 16, 23, 24; 26) aufgenommenen Bauteile (19, 20, 21, 27) mit einer oder mehreren Erhebungen (22) versehen sind.

3. Kraftübertragende Komponente gemäß Anspruch 1, dadurch gekennzeichnet, daß die Verbindung durch Impuls-Widerstandsschweißen hergestellt wird.

4. Kraftübertragende Komponente gemäß Anspruch 1, dadurch gekennzeichnet, daß sie als Motorkurbel (7) ausgeführt ist.

5. Kraftübertragende Komponente gemäß Anspruch 1, dadurch gekennzeichnet, daß sie als Antriebskurbel (10) ausgebildet ist.

6. Kraftübertragende Komponente gemäß Anspruch 1, dadurch gekennzeichnet, daß sie als Befestigungsteil (11) für Wischerarme (12) ausgebildet ist.

7. Kraftübertragende Komponente gemäß Anspruch 1, dadurch gekennzeichnet, daß die plattenförmigen Elemente als Blechformteile (26) ausgeführt sind.

8. Verfahren zur Herstellung einer kraftübertragenden Komponente gemäß einer der vorhergehenden Ansprüche, dadurch gekennzeichnet, daß als Fügeverfahren ein Impuls-Widerstandsschweißverfahren eingesetzt wird.

9. Verfahren zur Herstellung einer kraftübertragenden Komponente gemäß Anspruch 8, dadurch gekennzeichnet, daß die Schweißzeit 4ms bis 12ms beträgt.

10. Wischanlage für Fahrzeuge mit kraftübertragenden Komponenten, die plattenförmige Elemente (15, 16, 23, 24; 26) umfassen, die mit Kugelzapfen (19), Lagerwellen (20, 21) oder Konuselementen (27) versehen werden, dadurch gekennzeichnet, daß die plattenförmigen Elemente (15, 16, 23, 24; 26) mit Kugelzapfen (19) und/oder Lagerwellen (20, 21) und/oder Konuselementen (27) stoffschlüssig verbunden sind und die Verbindung stofflich durchgängig ausgebildet ist.
